Europäisches Patentamt

European Patent Office

Office européen des brevets

(19)

(11) Publication number: **0 109 837**
**B1**

(12) # EUROPEAN PATENT SPECIFICATION

(45) Date of publication of patent specification: **11.03.87**

(51) Int. Cl.⁴: **G 11 B 5/09**

(21) Application number: **83307039.4**

(22) Date of filing: **17.11.83**

(54) **Digital data detecting apparatus.**

(30) Priority: **17.11.82 JP 201659/82**

(43) Date of publication of application:
**30.05.84 Bulletin 84/22**

(45) Publication of the grant of the patent:
**11.03.87 Bulletin 87/11**

(84) Designated Contracting States:
**AT DE FR GB NL**

(56) References cited:
**EP-A-0 023 783**
**AT-B- 369 911**
**DE-A-3 129 500**
**DE-A-3 216 649**
**DE-A-3 304 447**
**GB-A-2 063 598**

(73) Proprietor: **SONY CORPORATION**
**7-35 Kitashinagawa 6-Chome Shinagawa-ku**
**Tokyo 141 (JP)**

(72) Inventor: **Sugita, Junkichi Patent Division**
**Sony Corporation 7-35 Kitashinagawa-6**
**Shinagawa-ku Tokyo (JP)**
Inventor: **Yada, Hiroaki Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

## Description

This invention relates to a digital data detecting apparatus.

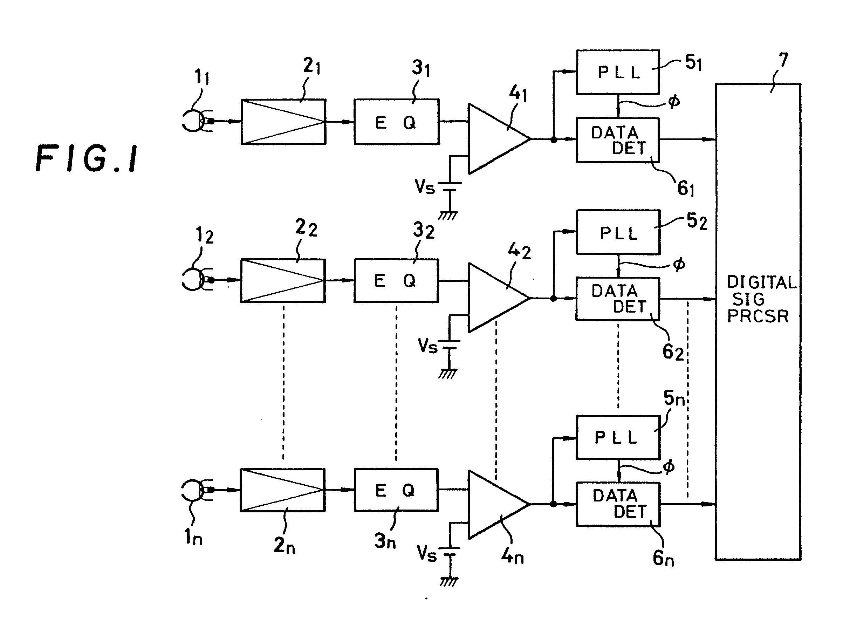

Digital tape recorders which have been developed in recent years record digital pulse code modulated (PCM) audio signals as k-bit words (where k is, for example, 16) in n tracks on a magnetic tape. There has been proposed a circuit, as shown in Figure 1 of the accompanying drawings, for playing back the magnetic tape on which such digital audio signals are recorded.

As illustrated in Figure 1, n playback heads $1_1$, $1_2$, ... $1_n$ are arranged transversely across the magnetic tape in alignment with the n tracks, respectively. To the playback heads $1_1$ to $1_n$, there are respectively connected preamplifiers $2_1$, $2_2$, ... $2_n$, equalizers $3_1$, $3_2$, ... $3_n$, comparators $4_1$, $4_2$, ... $4_n$, phase-locked loop (PLL) circuits $5_1$, $5_2$, ... $5_n$, and data detecting circuits $6_1$, $6_2$, ... $6_n$.

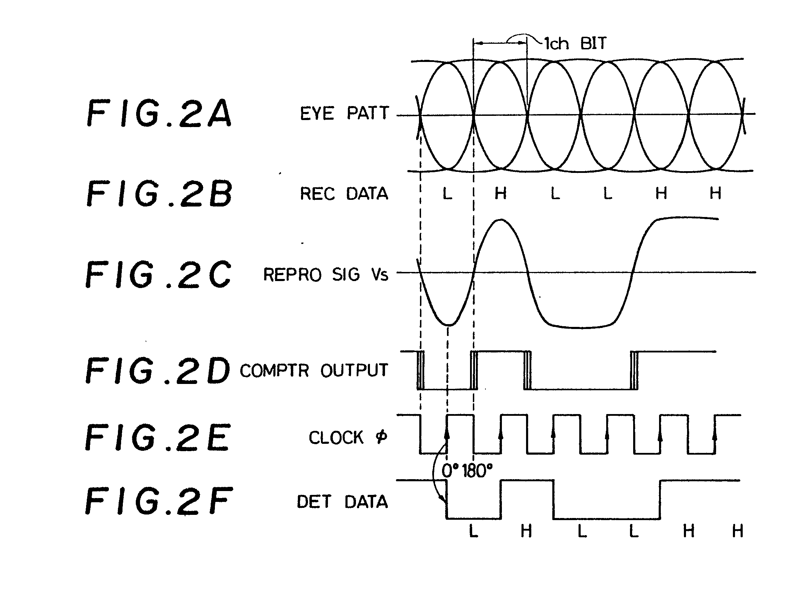

The circuit arrangement connected to the playback head $1_1$ will be described as a typical circuit system. The equalizer $3_1$ supplies a reproduced signal having an eye pattern as shown in Figure 2A of the accompanying drawings. The actual output waveform of the equalizer $3_1$ is an integrated waveform of the positive or negative half wave of the eye pattern which corresponds to the digital data on being recorded. For example, where the data at the time of being recorded comprises the data as shown in Figure 2B of the accompanying drawings, a reproduced waveform after it has been equalized is as illustrated in Figure 2C of the accompanying drawings. The signal from the equalizer $3_1$ is supplied to the comparator $4_1$ in which is it compared with a detection reference level Vs. The comparator $4_1$ produces an output as shown in Figure 2D of the accompanying drawings. The comparator output has rising and falling edges displaced due to jitter, and is supplied to the PLL circuit $5_1$ and the data detecting circuit $6_1$. The PLL circuit $5_1$ is responsive to the comparator output for generating a clock signal $\phi$ in synchronism with the reproduced signal as shown in Figure 2E of the accompanying drawings. The data detecting circuit $6_1$ comprises a d-type flip-flop, for example, for reading the comparator output based on the clock signal $\phi$ to regain the original data as shown in Figure 2F of the accompanying drawings. Where the clock signal $\phi$ has a phase such that a positive-going edge is at 0° and a following negative-going edge is at 180°, the comparator output is detected at 0°. The falling edge at 180° of the clock signal $\phi$ corresponds to the point where the reproduced signal intersects the detection reference level Vs. The detected data is then fed to a digital signal processing circuit 7 for signal processing.

The circuitry shown in Figure 1 requires n channels of circuit systems each composed of a preamplifier, an equalizer, a comparator, a PLL circuit and a data detecting circuit, and hence has a large number of connecting wires, resulting in a complex circuit arrangement. Moreover, as the circuity of Figure 1 comprises analog circuits, it has been difficult to incorporate integrated circuits in the circuit design.

Such circuity is also shown in European patent specification EP—A1—0 023 783, the disclosure in which corresponds to the pre-characterising part of claim 1 of the present application.

According to the present invention there is provided a digital data detecting apparatus for detecting an input digital signal at a predetermined channel bit rate, said apparatus comprising:

a phase locked loop circuit for sampling and holding the phase position $p_i$ of said digital signal; and

means responsive to said phase locked loop circuit for generating a data detecting signal scanning said digital signal to provide a detected data signal;

characterised by:

means for sampling said digital signal at a frequency which is M times (where M is greater than l) higher than the channel bit rate of said digital signal; and

means responsive to two adjacent sampled values from said sampling means for computing an interval from a point where said digital signal intersects a reference level to a sampling time, the reference level being representative of the boundary between logic levels of said digital signal;

wherein an output from said computing means representative of the computed interval provides a control input to said phase locked loop circuit such that said data detecting signal generated by said generating means is dependent on said computed interval.

The invention will now be described by way of example with reference to the accompanying drawings, throughout which like parts are referred to by like references, and in which:

Figure 1 is a block diagram of a previously proposed playback circuit for use in a digital tape recorder;

Figure 2 is a diagram of signal waveforms illustrative of the process by which the circuit of Figure 1 detects digital data;

Figure 3 is a diagram of signal waveforms used for describing the principles of the present invention;

Figure 4 is a block diagram of an embodiment of digital data detecting apparatus according to the present invention;

Figure 5 is a timing chart showing operation of the digital data detecting apparatus of Figure 4;

Figure 6 is a set of diagrams showing an example of digital data detection;

Figure 7 is a block diagram of a multitrack playback circuit in which an embodiment of the present invention is incorporated; and

Figure 8 is a block diagram of another embodiment of digital data detecting apparatus according to the present invention.

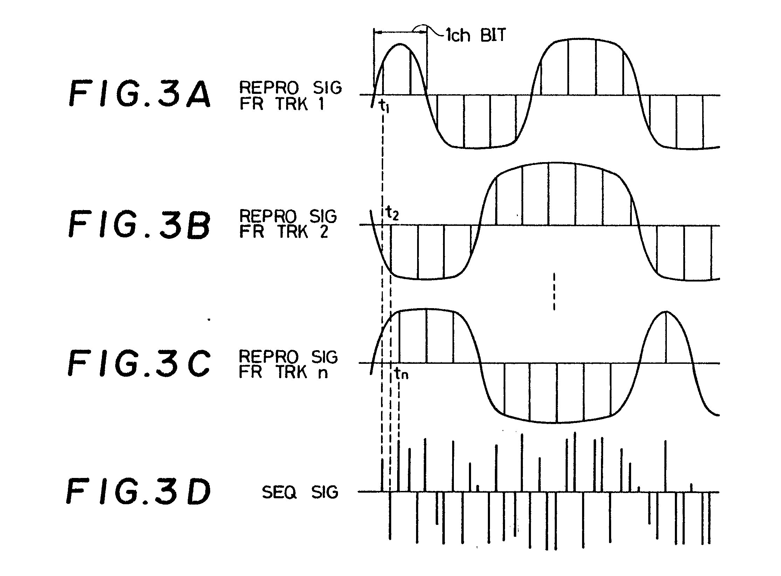

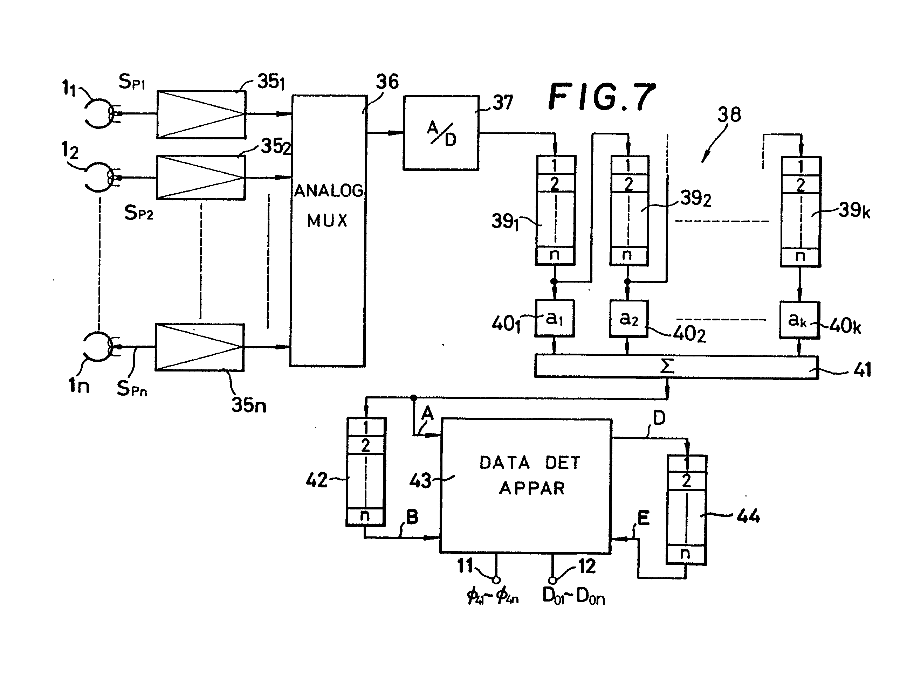

Figures 3A, 3B and 3C show the waveforms of signals respectively reproduced from n tracks on a magnetic tape. The reproduced signals are respectively produced from n playback heads at the same time. In an embodiment of the present invention, the reproduced signals are supplied to a multiplexer, as will be described later on with reference to Figure 7, for sampling the signals at mutually different times for time-division multiplex.

In Figure 3, the signals are sampled successively at times $t_1$, $t_2$, ... $t_n$ to convert parallel signals reproduced from the respective tracks into successive signals as shown in Figure 3D.

Where PCM signals are modulated by a non-return to zero (NRZ) modulation system (NRZI system, 4/5 MNRZI system, or 8-to-10 conversion system) with a channel bit rate of f bits/sec., a bandwidth up to f Hz is sufficient, as indicated by Nyquist theory and no original information is lost or damaged if the sampling frequency is 2f Hz. In Figure 3, therefore, the signal is sampled at least twice during a period corresponding to one channel bit. The sampling frequency may generally be expressed as Mf (M is greater than 1).

It is only necessary for the circuit following the multiplexer to supply such successive signals to a data detecting apparatus (described later), and hence the circuit arrangement is rendered simple. Detection of the original data from the successive signals in the respective tracks requires clock signals in synchronism with the reproduced signals in the respective tracks. It is difficult however to generate such clock signals directly from the successive signals.

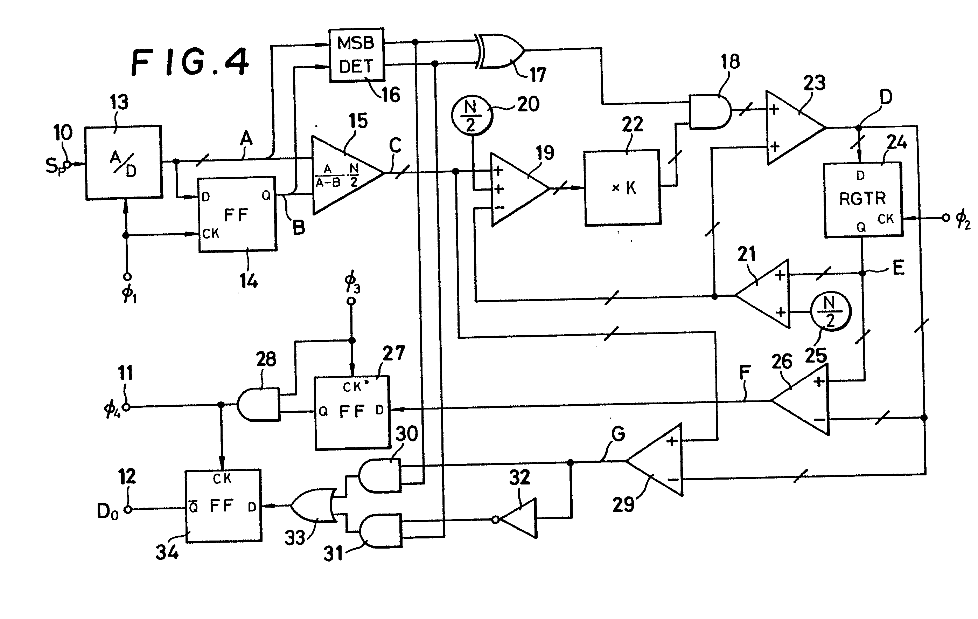

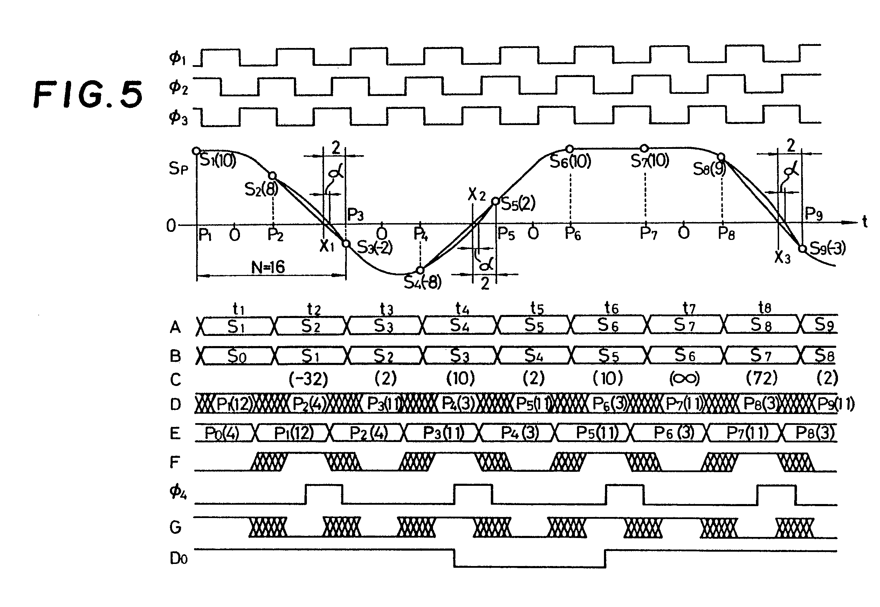

Figure 4 shows an embodiment of data detecting circuit according to the present invention for producing clocks from the successive signals in synchronism with the reproduced signals in the respective tracks and also for detecting the data in the respective tracks. Figure 5 is a timing chart showing operation of the data detecting circuit of Figure 4. Signals A to G in Figure 5 are indicative of outputs generated at points A to G, respectively, in the circuit of Figure 4. Clock signals $\phi_1$, $\phi_2$ and $\phi_3$, a reproduced signal Sp, an output clock signal $\phi_4$, and output data Do shown in Figure 5 are denoted by identical reference characters in Figure 4. For ease of illustration, it is assumed that an input terminal 10 in Figure 4 is supplied with a reproduced signal Sp from a single track.

In this embodiment, when the reproduced signal Sp having a channel bit rate f bits/sec. is supplied to the input terminal 10, an output clock signal $\phi_4$ is produced by a digital PLL circuit at an output terminal 11 in synchronism with the reproduced signal Sp, and output data Do is also supplied from an output terminal 12.

The principles of operation for generating the clock signal $\phi_4$ and the output data Do will now be described.

In Figure 5, the signal Sp is converted into digital data $S_1$, $S_2$, ... $S_9$ by sampling the signal Sp with the clock signal $\phi_1$ having a frequency of 2f Hz. Then, the phase positions $p_1$ to $p_9$ of sampling points for these data $S_1$ to $S_9$ are checked by detecting the points where the signal Sp intersects a detection level (which is assumed here to be zero level for simplicity) and expressing the phase positions $p_1$ to $p_9$ of the data $S_1$ to $S_9$ based on the zero-crossing points. The zero-crossing points are the points where the original data (recorded data) of the signal Sp vary from "H" to "L" or "L" to "H", and such points are representative of 180° phases of the clock in synchronism with the signal Sp (see Figure 2).

One period, that is, 0° to 360°, (two sampled lengths of the data $S_1$ to $S_9$ equals two periods of the clock signal $\phi_1$) of the clock signal in synchronism with the signal Sp is divided into N (sixteen) sections with their phase positions expressed by the numerals 0, 1, 2, ... 15, respectively. Therefore, the above zero-crossing points can be expressed by N/2 = "8". In the embodiment of Figure 5, the zero-crossing points are $x_1$, $x_2$ and $x_3$ between $S_2$ and $S_3$, $S_4$ and $S_5$, and $S_8$ and $S_9$, respectively. Where there is such a zero-crossing point between data $S_i$ and $S_{i1}$, the phase position $P_{i+1}$ of the data $S_{i1}$ can be determined by the following arithmetic operation:

$$P_{i+1} = \frac{S_{i+1}}{S_{i+1} - S_i} \cdot \frac{N}{2} + \frac{N}{2}$$

For example, the phase position $P_3$ can be determined by:

$$P_3 = \frac{S_3}{S_3 - S_2} \cdot \frac{N}{2} + \frac{N}{2}$$

By connecting $S_2$ and $S_3$ with a straight line, the point $x_1$ can be given as the length (time difference) from the zero-crossing point on the straight line to the sampling point for the data $S_3$. There is therefore an error between such a zero-crossing point and the actual zero-crossing point of the signal Sp, but such an error α can be corrected. Assuming that the data $S_2$ and $S_3$ have values "8" and "−2", respectively, the phase position $P_3$ of the data $S_3$ is spaced from the zero-crossing point $x_1$ by:

$$\frac{S_3}{S_3 - S_2} \cdot \frac{N}{2} \doteq \text{"2"}$$

(the length of about two divided sections with N = 16). Since the point $x_1$ is expressed by N/2 = "8" with the phase of 180°, the phase position $P_3$ of the point $S_3$ is expressed as 8 + 2 = "10". In reality, however, the phase position $P_3$ is corrected as described below and expressed as "11". The data $S_4$ following the data $S_3$ is negative as with the data $S_3$, and is spaced from the data $S_3$ by N/2 = "8", so that the phase position $P_4$ of the data $S_4$ can be given by 11 + 8 = "19". Actually, $P_4$ is expressed by 19 − N = "3". The phase position $P_5$ of the next data $S_5$ is determined by detecting the interval between the zero-crossing point $x_2$ and the phase position $P_5$, and adding "8" to the detected interval. Since the data $S_5$ to $S_8$ are positive, their phase positions $P_5$ to $P_8$ can be found by successively adding "8". Thus, phase position signals can be obtained which are indicative of the phase positions of the data $S_1$ to $S_9$ in terms of $P_1$ to $P_9$. The clock signal $\phi_4$ in synchronism with the signal Sp and the data Do can be detected from the phase position signals.

The clock signal $\phi_4$ is detected as follows:

Since the points $x_1$, $x_2$ and $x_3$ represent 180° phases of the clock signal $\phi_4$ of the signal Sp, the positions spaced from the points $x_1$, $x_2$ and $x_3$ successively by the length "8", that is, the points expressed by "0", are indicative of 0° phases of the clock signal $\phi_4$. The 0° phases serve as data detecting points for the signal Sp (Figure 2). By detecting these 0° phases from the above phase position signals and generating a clock in synchronism with the detected points, the clock signal $\phi_4$ can be produced. The 0° phases can be detected by comparing $p_i$ and $p_{i+1}$ at all times based on the phase position signals. When $p_i$ is greater than $p_{i+1}$, there is a 0° phase there between. For example, when the phase positions $p_1$ and $p_2$ of the data $S_1$ and $S_2$ are "12" and "4", respectively, and the phase positions go from "12" to "4", they successively follow the sequence "12", "13", "14", "15", "0", "1", "2", "3", "4". Since there is "0" in between it can be determined that there is a 0° phase or a data detecting point between the data $S_1$ and $S_2$. When the phase positions $p_2$ and $p_3$ of the data $S_2$ and $S_3$ are "4" and "11", respectively, the phase positions follow the sequence: "4", "5", "6", ... "10", "11" as they do from "4" to "11". With no "0" in between, it is determined that there is no 0° phase between the data $S_2$ and $S_3$.

The data of the signal Sp can be attained by determining whether the reproduced signal Sp corresponding to each data detecting point of the detected 0° phase is positive or negative.

Operation of the circuitry shown in Figure 4 based on the foregoing principles will be described. The circuitry of Figure 4 has a portion formed by a digital PLL circuit as described below.

The signal Sp applied to the input terminal 10 is fed to an analog-to-digital (A/D) converter 13 in which the signal is sampled with the clock signal $\phi_1$ and converted into the digital data $S_1$ to $S_9$ which are successively supplied to a point A. The data $S_1$ to $S_9$ are delayed one period of the clock signal $\phi_1$ by a D-type flip-flop (FF) 14 and then fed to a point B. The data from the points A and B are supplied to an arithmetic circuit 15 in which an arithmetic operation:

$$\frac{A}{A - B} \cdot \frac{N}{2}$$

is effected to determine the intervals between the zero-crossing points and the sampling phase positions. Assuming that the data $S_1$ to $S_9$ have values "10", "8", "−2", "−8", "2", "10", "9", "−3", the results of the arithmetic operation which appear at a point C are "−32", "2", "11", "2", "10", "∞", "−72", "2". The outputs from the points A and B are also applied to an MSB (sign bit) detecting circuit 16 which detects an MSB of each data. In the example of Figure 5, when the data $S_3$ is fed to the point A and the data $S_2$ is fed to the point B in the time slot $t_3$, their MSBs are different from each other. Accordingly, an exclusive-OR gate 17 supplied with the different MSBs produces an output of "H" level to open an AND gate 18. The output "2" at the point C at this time is representative of the time difference between the phase position $p_3$ of the data $S_3$ and the point $x_1$. The output "2" is added by an adder 19 to N/2 (= 8) supplied from an N/2 generator 20. The sum 2 + 8 = "10" is thus obtained as determining the phase position $p_3$ of the data $S_3$ through the arithmetic operation. To the adder 19, there is supplied an output from an adder 21, such as a value "12" indicative of an expected value of the phase position $p_3$ of the data $S_3$, as described later. The adder 19 performs an arithmetic operation to determine the difference between the sum and the expected value, that is, 10 − 12 = −2. The output "−2" from the adder 19 is supplied to a coefficient multiplier 22 in which the output from the adder 19 is multiplied by a coefficient K (0 is less than or equal to K is less than or equal to 1). If K = 0.5, then the coefficient multiplier 22 supplies an output −2 × 0.5 = −1. The output "−1" is supplied as a corrective value for $p_3$ through the AND gate 18 to an adder 23. Since the adder 23 is supplied with the expected value "12" from the adder 21, the adder 23 effects the addition −1 + 12 = 11 and supplies the result to a point D. The output "11" is held in a register 24 as the corrected $p_3$ of the data $S_3$, the register 24 comprising an m-bit ($2^m$ = N) register.

The expected value "12" is obtained simply by adding "8" to the value "4" of the phase position $p_4$ of the data $S_4$ determined in an immediately prior time slot $t_2$. The value "12" is compared by the adder 19 with the value "10" calculated by the arithmetic circuit 15 for the correction by "−2" due to jitter. After the correction is additionally revised into "−1" by the coefficient multiplier 2, the phase position $p_3$ is corrected into "11". The coefficient K serves to compensate for the error $\alpha$ at the point $x_1$.

The data in the register 24 is read by the clock signal $\phi_2$ which is 90° delayed with respect to the clock signal $\phi_1$, and the read-out value "11" is supplied to a point E and then to the adder 21 in which the value "11" is added to N/2 (=8) from an N/2 generator 25. When the data $S_4$ and $S_3$ appear in the points A and B, respectively, in a next time slot $t_4$ at the timing of the clock signal $\phi_1$, the exclusive-OR gate 17 supplies an output of "L" level since their MSBs are the same (negative), thus closing the AND gate 18. The output from the coefficient multiplier 22 is not supplied to the adder 23, to which only the output (11 + 8) − N = 3 is fed from the adder 21.

The output "3" is substantially representative of the phase position $p_4$ of the data $S_4$ and is

supplied to the register 24. At this time, the phase positions $p_4$ and $p_3$ appear respectively at the points D and E. More specifically, the phase position $p_{i+1}$ of the data $S_{i+1}$ from the point A appear at the point D, and the phase position $p_i$ of the data $S_i$ from the point B appear at the point E.

In a succeeding time slot $t_5$, the point $x_2$ is determined on the basis of the data $S_4$ and $S_5$ at the points A and B, and the phase position $p_5$ of the data $S_5$ at the points A and B, and the phase position $p_5$ of the data $S_5$ is corrected into "11" based on the point $x_2$. Since the data $S_5$ to $S_8$ are positive in the signal Sp, the phase positions $p_6$, $p_7$ and $p_8$ are obtained by successively adding N/2. The point $x_3$ is further detected to correct the phase position $p_9$ of the data $S_9$. The same operation will then be repeated. Thus, the phase position signals indicative of the phase positions $p_1$ to $p_9$ of the data $S_1$ to $S_9$ are produced at the point D, and the phase position signals generated by delaying the above phase position signals with the clock signal $\phi_2$ are produced at the point E. In the example of Figure 5, the phase positions $p_1$ to $p_9$ are "12", "4", "11", "3", "11", "3", "11", "3", "11", respectively.

In the foregoing arrangement, a digital PLL circuit comprises the adder 19, the coefficient multiplier 22, the AND gate 18, the adder 23, the register 24 and the adder 21. The register 24 and the adder 21 form a VCO (voltage-controlled oscillator) in the PLL circuit, the adder 19 having the function of a phase comparator. The coefficient multiplier 22 serves to determine the loop gain of the PLL circuit. The digital PLL circuit is capable of producing the phase position signals as the output from the adder 21, or the output at the point D, or the output at the point E.

Data detecting points are detected from the phase position signals as follows. If the phase position $p_1$ of the data $S_1$ is "12", for example, then it is found that there is a point "0" in the length "8" up to the next sampling point (the position of $S_2$). If the phase position $p_2$ of the data $S_2$ is "4", for example, then it is found that there is no point "0" in the interval up to the next sampling point (the position of $S_3$). It can thus be determined that if the value obtained by adding "8" to a certain phase position $p_i$ is more than "16 (=0)", then there is a 0° phase in the interval up to the next phase position $p_{i+1}$, and if the value produced by adding "8" to $p_i$ is smaller than "16", then no 0° phase is present in the interval up to the next phase position $p_{i+1}$.

The above process of determination has however the following drawback. If a certain phase position $p_i$ is "7", for example, then the next phase position $p_{i+1}$ is 7 + 8 = 15, and it is determined that there is no 0° phase between $p_i$ and $p_{i+1}$ according to the above determining process. When the value $p_{i+1}$ is corrected into "1", for example, the above process determines that there is no 0° phase regardless of the fact that there is a 0° phase between $p_i$ and $p_{i+1}$ in reality.

To eliminate the above shortcomings, a comparator 26 is provided for comparing the outputs at the points D and E, that is, $p_i$ and $p_{i+1}$. When $p_i$ is greater than $p_{i+1}$, a "0" point is regarded as being present between data $S_i$ and $S_{i+1}$, and the comparator 26 supplies an output of "H" level to a point F. In the example of Figure 5, there are data detecting points between $S_1$ and $S_2$, $S_3$ and $S_4$, $S_5$ and $S_6$, and $S_7$ and $S_8$, and the outputs of "H" level indicative of the data detecting points appear at the point F at the above timing.

The output from the point F is supplied to a D terminal of an FF 27 which is driven by the clock signal $\phi_3$ that is 90° delayed with respect to the clock signal $\phi_2$. A Q output from the FF 27 and the clock signal $\phi_3$ are supplied to an AND gate 28 to produce the clock signal $\phi_4$ at the output terminal 11. The clock signal $\phi_4$ will be employed in actual data detection as described later on.

The method of detecting data will now be described. Data detection can be known from data on opposite sides of a data detecting point indicated by an output of "H" level at the point F. In Figure 5, there is a data detecting point "0" between $p_1$ and $p_2$, and data $S_1$ and $S_2$ on opposite sides of the data detecting point "0" are "positive". Therefore, the data sought is "H". There is also a data detecting point "0" between $p_3$ and $p_4$, and data $S_3$ and $S_4$ on opposite sides of the data detecting point are "negative". Accordingly, the data is "L". Two data $S_i$ and $S_{i+1}$ spaced 1/2 of a sampling period back and forth from these data detecting points are normally of the same sign, and one data substantially free from any error can be determined per two sampling operations. Whether the two data $S_i$ and $S_{i+1}$ are "positive" or "negative" can be determined by finding if the MSBs of the data $S_i$ and $S_{i+1}$ are "H" or "L".

The foregoing data detecting method may suffer from the following difficulty.

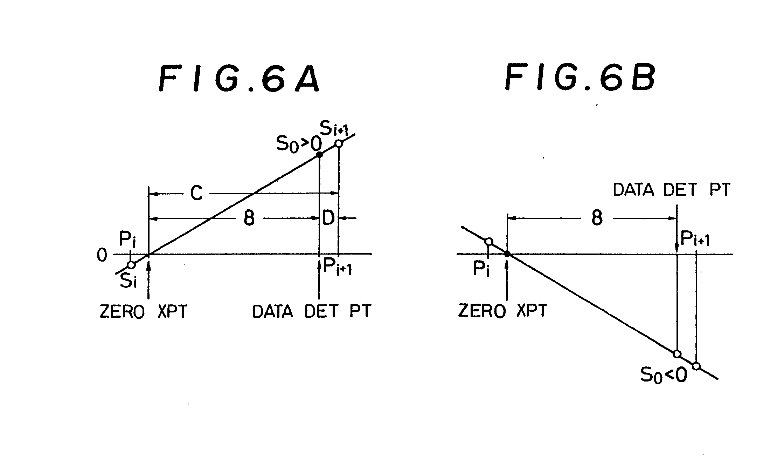

There is an instance as shown in Figure 6 at A and B in which there are a zero-crossing point and a data detecting point between the phase positions $p_i$ and $p_{i+1}$ of two data $S_i$ and $S_{i+1}$. In Figure 6A, data So sought is "H", and in Figure 6B, data So sought is "L". With the above data detecting method, the MSBs of the data $S_i$ and $S_{i+1}$ on opposite sides of the data detecting point are of different signs, and which data should be employed cannot be determined.

To overcome the above problem, a comparator 29 is provided for comparing the outputs at the points C and D, and supplying an output of "H" level to a point G when the output at the point C is greater than the output at the point D. The output from the point C indicates the time interval from the zero-crossing point to the sampling time $p_{i+1}$, while the output from the point D represents the time interval from the data detecting point to the sampling time $p_{i+1}$. When any situation as shown in Figures 6A and 6B arises, the output from the point C becomes larger than the output from the point D, and the signal So at the data detecting point has the same sign as that of the data $S_{i+1}$. Conversely, when the output from the point C is smaller than the output from the point D, the signal So at the data detecting point has the same sign as that of the data $S_i$. Consequently, data can be determined by checking the MSB of the data $S_{i+1}$ in Figures 6A and 6B.

The output from the point G is supplied to one terminal of an AND gate 30 and inverted by an inverter 32, the inverted output being fed to one terminal of an AND gate 31. The other terminal of the AND gate 30 is supplied with the MSB of the data $S_{i+1}$ from the point A through the MSB detecting circuit 16. The other terminal of the AND gate 31 is supplied with the MSB of the data $S_i$ from the point B through the MSB detecting circuit 16. The output from the point C is meaningless other than during zero-crossing point detection, and an output of "H" or "L" level normally appears at the point G. Outputs from the AND gates 30 and 31 are fed through an OR gate 33 to the D terminal of an FF 34 driven by the clock signal $\phi_4$.

With the above construction, the two MSBs from the MSB detecting circuit 16 are normally both "positive" or "negative", and the output from the point G is normally "H" or "L". Therefore, the output from either the AND gate 30 or the AND gate 31 is of the level corresponding to the MSB, and is supplied through the OR gate 33 to the FF 34. The FF 34 supplies data Do from a $\overline{Q}$ terminal thereof to the output terminal 12 with the clock signal $\phi_4$ serving as a data detection timing. In Figure 6A, the output from the point G becomes of "H" level, and the MSB applied to the AND gate 30 becomes "positive". The AND gate 30 now produces data of "H" level. In Figure 6B, the MSB applied to the AND gate 31 is "negative" so that data of "L" level is obtained.

The output data Do is demodulated by a following demodulator, written into a memory, and read out of the memory at a proper timing thereby to remove jitter.

The foregoing arrangement has been directed to the detection of data of the signal reproduced from a single track. A circuit arrangement for detecting data from successive signals generated by successively sampling n signals reproduced from n tracks as described with reference to Figure 3 will now be described with reference to Figure 7.

As shown in Figure 7, reproduced signals $Sp_1$ to $Sp_n$ from n heads $I_1$ to $I_n$ are applied through preamplifiers $35_1$ to $35_n$, respectively, to an analog multiplexer 36. The multiplexer 36 samples the reproduced signals $Sp_1$ to $Sp_n$ as shown in Figures 3A, 3B and 3C, and produces successive signals as shown in Figure 3D. The successive signals are converted by an A/D converter 37 into digital successive signals which are fed to an equalizer circuit 38. The equalizer circuit 38 is constructed as a digital filter comprising k n-stage shift registers $39_1$ to $39_k$, coefficient multipliers $40_1$ to $40_k$ for multiplying outputs from the shift registers $39_1$ to $39_k$ by respective coefficients $a_1$, $a_2$, ... $a_k$, and a register 41.

The shift registers $39_1$ to $39_k$ produce outputs which are the data of the signals reproduced from the same tracks at all times. These data are multiplied by the coefficients in the coefficient multipliers $40_1$ to $40_k$, and then converted by the register 41 into successive signals. The successive signals comprise digital successive signal which have been converted by the A/D converter 37 and corrected by the equalizer circuit 38. The corrected successive signals are supplied to an n-stage register 42 and a digital data detecting apparatus 43. The digital data detecting apparatus 43 is constructed as shown in Figure 4 except that the A/D converter 13 and the register 24 in Figure 4 are replaced with the A/D converter 37 and the n-stage register 44 in Figure 7. The points A, B, D and E in Figure 7 correspond respectively to those shown in Figure 4.

With the above arrangement of Figure 7, data $S_{i+1}$ and $S_i$ on the same tracks appear at the points A and B successively from track to track, and are processed successively from track to track in the operation described with reference to Figures 4 and 5. As a result, clock signals $\phi_{4_1}$ to $\phi_{4_n}$ of each track are sequentially supplied to the output terminal 11, and data $D_{0_1}$ to $D_{0_n}$ are sequentially supplied to the output terminal 12. The registers $39_1$ to $39_k$ may be replaced with bucket brigade devices or charge-coupled devices, in which case the A/D converter 37 is disposed between the equalizer circuit 38 and the digital data detecting apparatus 43.

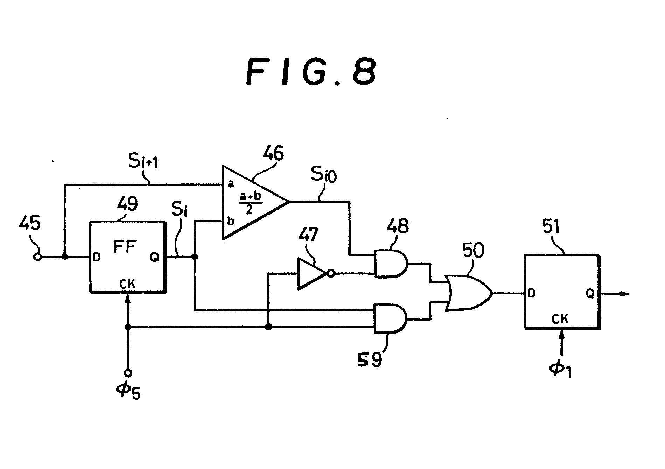

The foregoing description has been directed to the application incorporating the NRZ modulation system with a window margin of 1T (T = 1/f when the channel bit rate is f bits/sec.). Where modulation systems other than NRZ, such as MFM, Miller[2], 3PM or HDM systems are employed in which the window margin is 0.5T and the shortest wavelength is greater than or equal to 2T (minimum magnetization reversing width 1T), the channel bit rate is 2/T (2f bits/sec.). In this case, the sampling frequency for the reproduced signals in Figures 3 and 5 becomes 4f Hz. Since f = 1/T or below is enough for the signal bandwidth, the sampling efficiently is higher than necessary. The circuitry of Figure 8 is used in such an instance.

As shown in Figure 8, data sampled at 2f Hz is supplied to an input terminal 45. The data is then supplied to a terminal $a$ of an arithmetic circuit 46, and delayed by an FF 49 driven by a clock signal $\phi_5$ and also supplied to the arithmetic circuit 46. The arithmetic circuit 46 effects the arithmetic operation (a + b)/2 to obtain a value $S_{i0}$ intermediate between the current data $S_{i+1}$ and the delayed data $S_i$ immediately prior thereto. The intermediate data $S_{i0}$ and a clock signal obtained by inverting the clock signal $\phi_5$ in an inverter 47 are supplied to an AND gate 48. The data $S_i$ and the clock signal $\phi_5$ are fed to an AND gate 59. Outputs from the AND gates 48 and 59 are supplied to an OR gate 50 which produces data in the order of $S_i$, $S_{i0}$, $S_{i1}$. Stated otherwise, the data sampled at 2f Hz can be produced as data sampled at apparently doubled frequency. These data are corrected for jitter by an FF 51 driven by

the clock signal $\phi_1$, and supplied to the point A in Figure 4.

In the foregoing arrangement, the equalizer circuit 38 and the digital detecting apparatus 43 can be shared by the n tracks, and the overall circuitry is simpler than the conventional circuitry shown in Figure 1. The circuitry can be implemented by an integrated circuit because of its digital signal processing capability.

Thus with embodiments of the present invention, the playback circuit for use in a digital recording and reproducing apparatus incorporating a multitrack recording system can be simplified in construction and can be fabricated as an integrated circuit.

## Claims

1. A digital data detecting apparatus for detecting an input digital signal (Sp) at a predetermined channel bit rate, said apparatus comprising: a phase locked loop circuit (18, 19, 21—24) for sampling and holding the phase position $p_i$ of said digital signal (Sp); and

means (27—28) responsive to said phase locked loop circuit (18, 19, 21—24) for generating a data detecting signal ($\phi_4$) scanning said digital signal (Sp) to provide a detected data signal (Do); characterised by:

means (13) for sampling said digital signal (Sp) at a frequency which is M times (where M is greater than 1) higher than the channel bit rate of said digital signal (Sp); and

means (15) responsive to two adjacent sampled values ($S_i$, $S_{i+1}$) from said sampling means (13) for computing an interval from a point where said digital signal (Sp) intersects a reference level to a sampling time ($t_i$), the reference level being representative of the boundary between logic levels of said digital signal (Sp);

wherein an output from said computing means (15) representative of the computed interval provides a control input to said phase locked loop circuit (18, 19, 21—24) such that said data detecting signal ($\phi_4$) generated by said generating means (26—28) is dependent on said computed interval.

2. A digital data detecting apparatus according to claim 1 wherein said phase locked loop circuit comprises means (23, 24) for generating a phase position of a sampling time with a channel bit period being divided into N equal sections having phase positions $p_i$ respectively expressed by 0 to N-1, means (19) for comparing a value obtained by adding N/2 to said output from said computing means (15) with an output from said phase position generating means (23, 24), and means (18, 22) responsive to an output from said comparing means (19) for controlling said phase position generating means (23, 24), wherein said data detecting signal generating means (26—28) is responsive to an output from said phase position generating means (23, 24).

3. A digital data detecting apparatus according to claim 1 wherein said digital signal (Sp) comprises successive signals generated by sampling a plurality of digital signals ($Sp_1$—$Sp_n$) at mutually different times ($t_1$—$t_n$).

4. A digital data detecting apparatus according to claim 2 wherein said data detecting signal generating means (26—28) includes means (26) for determining that when the phase positions $p_i$ and $p_{i+1}$ of two adjacent sampling times have the relationship $p_i$ is greater than $p_{i+1}$, there is a data detecting point between the phase positions of said two sampling times.

5. A digital data detecting apparatus according to claim 4 wherein said phase position $p_{i+1}$ of the sampling time is compared with the output from said computing means (15), and when the phase position $p_{i+1}$ is larger than the output from said computing means (15), the sampled data at the phase position $p_{i+1}$ is regarded as data to be detected, and when the (phase position $p_{i+1}$ is smaller than the output from said computing means (15) the sampled data at the phase position $p_i$ is regarded as data to be detected.

## Patentansprüche

1. Detektionsgerät für digitale Daten zum Erfassen eines ankommenden Digitalsignals (Sp), das eine vorbestimmte Kanalbitrate hat,

mit einem Phasenregler (18, 19, 21—24) zur Abtastung und Speicherung der Phasenlage $p_i$ des Digitalsignals (Sp) und

mit einer Generetoreinrichtung (27—28), die abhängig vom Phasenregler (18, 19, 21—24) ein Datenerfassungssignal ($\phi_4$) erzeugt, das das Digitalsignal (Sp) abtastet, um ein erfaßtes Datensignal (Do) vorzusehen, gekennzeichnet durch eine Abtasteinrichtung (13) zur Abtastung des Digitalsignals (Sp) mit einer Frequenz, die um das M-fache (M>1) größer ist als die Kanalbitrate des Digitalsignals (Sp), und

eine Recheneinrichtung (15), die abhängig von zwei benachbarten Abtastwerten ($S_i$, $S_{i+1}$) von der Abtasteinrichtung (13) das Intervall zwischen einem Punkt, an dem das Digitalsignal (Sp) einen die Grenze zwischen Logik-Pegeln des Digitalsignals kennzeichnenden Referenzpegel schneidet, und einen Abtastzeitpunkt ($t_i$) berechnet,

wobei ein für das berechnete Intervall kennzeichnendes Ausgangssignal der Recheneinrichtung (15) ein Steuereingangssignal für den Phasenregler (18, 19, 21—24) bildet, derart, daß das von der Generatoreinrichtung (26—28) erzeugte Datenerfassungssignal ($\phi_4$) von dem berechneten Intervall abhängig ist.

2. Detektionsgerät für digitale Daten nach Anspruch 1, bei dem der Phasenregler aufweist: eine Phasenlagen-Generatoreinrichtung (23, 24) zur Erzeugung einer Phasenlage für eine Abtastzeit mit einer Kanalbitperiode, die in N gleiche Abschnitte unterteilt ist, deren Phasenlagen $p_i$ jeweilig mit 0 bis N-1 bezeichnet sind,

eine Vergleichereinrichtung (19) für den Vergleich eines Werts, der durch Addition von N/2 zu dem Ausgangssignal der Recheneinrichtung (15) erhalten ist, mit einem Ausgangssignal der Phasenlagen-Generatoreinrichtung (23, 24), und

eine Steuereinrichtung, die abhängig vom Ausgangssignal der Vergleichereinrichtung (19) die Phasenlagen-Generatoreinrichtung (23, 24) steuert, wobei die Generatoreinrichtung zur Erzeugung des Datenerfassungssignals ($\phi_4$) auf ein Ausgangssignal der Phasenlagen-Generatoreinrichtung (23, 24) anspricht.

3. Detektionsgerät für digitale Daten nach Anspruch 1, bei dem das Digitalsignal (Sp) aufeinanderfolgende Signale umfaßt, die durch Abtastung mehrerer Digitalsignale ($Sp_1$—$Sp_n$) zu jeweils unterschiedlichen Zeiten ($t_1$—$t_n$) erzeugt sind.

4. Detektionsgerät für digitale Daten nach Anspruch 2, bei dem die Generatoreinrichtung (26—28) zur Erzeugung des Datfassungssignals eine Einrichtung (26) aufweist, die das Vorhandensein eines Datenerfassungspunkts zwischen den Phasenlagen $p_i$ und $p_{i+1}$ zweier benachbarter Abtastzeiten feststellt, wenn zwischen den Phasenlagen $p_i$ und $p_{i+1}$ zweier benachbarter Abtastzeiten die Beziehung $p_i > p_{i+1}$ besteht.

5. Detektionsgerät für digitale Daten nach Anspruch 4, bei dem die Phasenlage $p_{i+1}$ der Abtastzeit mit dem Ausgangssignal der Recheneinrichtung (15) verglichen wird, und bei dem das Datensignal bei der Phasenlage $p_{i+1}$ als zu erfassende Daten betrachtet werden, wenn die Phasenlage $p_{i+1}$ größer ist als das Ausgangssignal der Recheneinrichtung (15), und das Datensignal bei der Phasenlage $p_i$ als zu erfassende Daten betrachtet werden, wenn die Phasenlage $p_{i+1}$ kleiner ist als das Ausgangssignal der Recheneinrichtung (15).

## Revendications

1. Dispositif de détection de données numériques pour détecter un signal numérique d'entrée (Sp) à un débit binaire de canal prédéterminé, le dispositif comprenant un circuit à boucle à blocage de phase (18, 19, 21—24) pour échantillonner et maintenir la position de phase $p_i$ du signal numérique (Sp); et un moyen (27—28) sensible au circuit à boucle à blocage de phase (18, 19, 21—24) pour engendrer un signal de détection de données ($\phi_4$) analysant le signal numérique (Sp) pour fournir un signal de données détectées (Do); caractérisé par:

un moyen (13) pour échantillonner le signal numérique (Sp) à une fréquence qui est M fois (M étant supérieur à 1) supérieure au débit binaire de canal du signal numérique (Sp); et

un moyen (15) sensible à deux valeurs échantillonnées voisines ($S_i$, $S_{i+1}$) provenant du moyen d'échantillonnage (13) pour calculer un intervalle d'un point où le signal numérique (Sp) coupe un niveau de référence à un temps d'échantillonnage ($t_i$), le niveau de référence étant représentatif de la limite entre les niveaux logiques du signal numérique (Sp);

dans lequel un signal de sortie du moyen de calcul (15) représentant l'intervalle calculé fournit un signal d'entrée de commande au circuit à boucle à blocage de phase (18, 19, 21—24) tel que le signal de détection de données ($\phi_4$) engendré par le moyen générateur (26—28) est fonction de l'intervalle calculé.

2. Dispositif de détection de données numériques selon la revendication 1, dans lequel le circuit à boucle à blocage de phase comprend un moyen (23, 24) pour engendrer une position de phase d'un temps d'échantillonnage, une période de bit de canal étant divisée en N sections égales ayant des positions de phase $p_i$ respectivement exprimées par 0 à N-1, un moyen (19) pour comparer une valeur obtenue en additionnant N/2 avec le signal de sortie du moyen de calcul (15) à un signal de sortie du moyen générateur de position de phase (23, 24), et un moyen (18, 22) sensible à un signal de sortie du moyen de comparaison (19) pour commander le moyen générateur de position de phase (23, 24), dans lequel le moyen générateur de signaux de détection de données (26—28) est sensible à un signal de sortie du moyen générateur de position de phase (23, 24).

3. Dispositif de détection de données numériques selon la revendication 1, dans lequel le signal numérique (Sp) comprend des signaux successifs engendrés en échantillonnant un ensemble de signaux numériques ($Sp_1$—$Sp_n$) à des temps différents entre eux ($t_1$—$t_n$).

4. Dispositif de détection de données numériques selon la revendication 2, dans lequel le moyen générateur de signaux de détection de données (26—28) comprend un moyen (26) pour déterminer que, lorsque les positions de phase $p_i$ et $p_{i+1}$ de deux temps d'échantillonnage voisins sont liées par la relation $p_i$ supérieure à $p_{i+1}$, il y a un point de détection de données entre les positions de phase des deux temps d'échantillonage.

5. Dispositif de détection de données numériques selon la revendication 4, dans lequel la position de phase $p_{i+1}$ du temps d'échantillonnage est comparée au signal de sortie du moyen de calcul (15), et, quand la position de phase $p_{i+1}$ est supérieure au signal de sortie du moyen de calcul (15), la donnée échantillonnée à la position de phase $p_{i+1}$ est considérée comme la donnée à détecter, et, quand la position de phase $p_{i+1}$ est inférieure au signal de sortie du moyen de calcul (15), la donnée échantillonnée à la position de phase $p_i$ est considérée comme la donnée à détecter.

FIG.1

0 109 837

FIG.2A EYE PATT

FIG.2B REC DATA

FIG.2C REPRO SIG Vs

FIG.2D COMPTR OUTPUT

FIG.2E CLOCK φ

FIG.2F DET DATA

FIG.3A REPRO SIG FR TRK 1

1ch BIT

$t_1$

FIG.3B REPRO SIG FR TRK 2

$t_2$

FIG.3C REPRO SIG FR TRK n

$t_n$

FIG.3D SEQ SIG

FIG.4

FIG.5

0 109 837

# FIG.6A

# FIG.6B

FIG.6A labels: $S_0>0$, $S_{i+1}$, $S_i$, $P_i$, $P_{i+1}$, C, 8, D, 0, ZERO XPT, DATA DET PT

FIG.6B labels: DATA DET PT, 8, $P_i$, $P_{i+1}$, $S_0<0$, ZERO XPT

# FIG. 7

# FIG.8